# FASCICULE DE BREVET EUROPEEN

(11) **EP 2 107 307 B1**
(45) Date de publication et mention de la délivrance du brevet: **12.07.2017**
(21) Numéro de dépôt: 09155276.0
(22) Date de dépôt: 16.03.2009
(51) Int. Cl.: F23R 3/00, F23R 3/50, F23R 3/60

(54) **Chambre de combustion de turbine à gaz à parois interne et externe sectorisées**
Gasturbinenbrennkammer mit in Sektoren unterteilten Innen- und Außenwänden
Gas turbine combustor with sectorised internal and external walls

(30) Priorité: 03.04.2008 FR 0852229
(43) Date de publication de la demande: 07.10.2009
(73) Titulaire: Snecma Propulsion Solide, 33187 Le Haillan Cedex (FR)
(72) Inventeur: Carrere, Benoit, 33320, Le Taillan Medoc (FR); Habarou, Georges, 33310, Le Bouscat (FR); Spriet, Patrick, 33520, Bruges (FR); Camy, Pierre, 33160, Saint Medard en Jalles (FR)
(74) Mandataire: Delumeau, François Guy

(56) Documents cités:
- EP-A- 0 943 867
- EP-A- 1 441 180
- EP-A- 1 593 913
- EP-A- 1 635 118
- EP-A- 1 818 616
- FR-A- 941 475
- GB-A- 2 432 902
- US-A- 3 956 886
- US-A- 4 158 949
- US-A- 4 907 411
- US-A1- 2002 184 892

## Description

### Arrière-plan de l'invention

L'invention concerne les turbines à gaz et plus particulièrement la configuration et le montage d'une chambre de combustion annulaire à parois interne et externe en matériau composite à matrice céramique (CMC). Des domaines d'application de l'invention sont les moteurs aéronautiques à turbine à gaz et les turbines à gaz industrielles.

L'utilisation de CMC pour réaliser des parois de chambre de combustion de turbines à gaz a été proposée en raison des propriétés thermostructurales des CMC, c'est-à-dire leur capacité à conserver de bonnes propriétés mécaniques à des températures élevées. En effet, une température de combustion plus élevée est recherchée pour améliorer le rendement et réduire l'émission d'espèces polluantes en particulier pour des moteurs aéronautiques à turbine à gaz par réduction du débit d'air de refroidissement des parois La chambre de combustion est montée entre des carters métalliques interne et externe au moyen d'éléments de liaison souples, c'est-à-dire élastiquement déformables, qui permettent d'absorber les différences de variations dimensionnelles d'origine thermique entre parties métalliques et parties en CMC. On pourra se référer en particulier aux documents US 6 708 495 et US 7 234 306.

Les matériaux CMC sont constitués d'un renfort fibreux réfractaire, par exemple en fibres de carbone ou en fibres céramiques, qui est densifié par une matrice céramique. Pour la réalisation d'une pièce de forme complexe en CMC, on élabore une préforme fibreuse ayant une forme voisine de la pièce à réaliser et on densifie ensuite la préforme. La densification peut être réalisée par voie liquide ou par voie gazeuse ou par une combinaison des deux. La voie liquide consiste à imprégner la préforme par une composition liquide contenant un précurseur de la matrice céramique à réaliser, le précurseur étant typiquement une résine en solution, puis à réaliser un traitement thermique de pyrolyse après réticulation. La voie gazeuse est l'infiltration chimique en phase gazeuse ou CVI (« Chemical Vapor Infiltration ») qui consiste à placer la préforme dans un four dans lequel est introduite une phase gazeuse réactionnelle qui diffuse au sein de la préforme et, dans des conditions prédéterminées notamment de température et de pression, forme un dépôt céramique solide sur les fibres par décomposition d'un précurseur de céramique contenu dans la phase gazeuse ou par réaction entre constituants de celle-ci.

Quel que soit le processus de densification utilisé, un outillage de maintien de la préforme dans la forme désirée est nécessaire, au moins pendant une première phase de densification pour consolidation de la préforme.

La réalisation de parois annulaires de chambre de combustion de turbine à gaz requiert des outillages de forme complexe. En outre, dans le cas d'une densification par CVI, les préformes peuvent occuper un espace important d'un four de densification et une optimisation du chargement d'un four est hautement souhaitable.

Le document US 4 907 411 propose une chambre de combustion dont les parois sont divisées longitudinalement et circonférentiellement en panneaux en céramique. A leurs extrémités longitudinales, les panneaux sont repliés pour former des parties en U et sont supportés par des pièces métalliques annulaires fixées à une enveloppe métallique externe et s'engageant dans les parties en U avec interposition d'éléments d'isolation.

Le document US 3 956 886 montre la réalisation de parois de chambre de combustion sous forme de tuiles en céramique. Les tuiles peuvent présenter des bords repliés en U insérés dans des logements définis par des pièces métalliques fixées à des enveloppes métalliques interne et externe, ce qui rend le montage peu approprié dans le cas de dilatations différentielles.

Le document EP 1 635 118 propose la réalisation d'une paroi de chambre exposée à des gaz chauds au moyen de tuiles en CMC qui sont supportées par une structure de support espacée de la paroi de chambre. Les tuiles sont formées avec des pattes qui s'étendent dans l'espace entre la paroi de chambre et la structure de support et à travers la structure de support pour être reliées à celle-ci du côté extérieur. Les liaisons sont rigides et occupent un volume significatif à l'extérieur de la structure de support. De plus, la réalisation de l'étanchéité nécessite la présence d'un carter additionnel.

### Objet et résumé de l'invention

L'invention a pour objet de remédier aux inconvénients précités et propose à cet effet un ensemble de chambre de combustion de turbine à gaz, comportant : un carter métallique interne ; un carter métallique externe ; une chambre de combustion annulaire ayant une paroi interne et une paroi externe en matériau composite à matrice céramique et un fond de chambre raccordé aux parois interne et externe ; et des éléments de liaison élastiquement déformables reliant la paroi interne et la paroi externe de la chambre respectivement au carter métallique interne et au carter métallique externe,
ensemble dans lequel, conformément à l'invention, chacune des parois interne et externe de la chambre est divisée circonférentiellement en secteurs adjacents le long de bords longitudinaux, chaque secteur s'étendant continûment depuis le fond de chambre jusqu'à l'extrémité opposée de la chambre, chaque secteur étant replié vers l'extérieur de la chambre au niveau de chacun de ses bords longitudinaux pour former une partie à section en U se terminant par un retour espacé de la face extérieure de la paroi de chambre correspondante, et les éléments de liaison sont reliés aux parois interne et externe de la chambre par fixation sur les retours des secteurs.

La division des parois de chambre de combustion en secteurs permet de limiter les dimensions et la complexité de forme des pièces à réaliser, donc de diminuer sensiblement le coût de fabrication. Par ailleurs, les variations dimensionnelles différentielles entre les carters métalliques et les parois de chambre de combustion en CMC peuvent être aisément et efficacement absorbées par la déformation élastique des éléments de liaison et par la souplesse des bords longitudinaux repliés des secteurs de chambre. De plus, les éléments de liaison sont disposés dans l'intervalle entre les parois de chambre et les carters métalliques où ils sont refroidis par le flux d'air de contournement de la chambre.

Avantageusement, les éléments de liaison sont en forme de pontets à section sensiblement en « oméga », chaque pontet ayant un sommet relié à l'un des carters métalliques interne et externe et des pieds reliés aux retours voisins de deux secteurs adjacents de la paroi de chambre interne ou externe correspondante. Ainsi, les éléments de liaison contribuent-ils également à la liaison entre secteurs adjacents de paroi de chambre.

Les éléments de liaison sont avantageusement fixés sur les faces externes des retours des secteurs, c'est-à-dire en un emplacement le plus éloigné de la face interne des secteurs exposée en service aux températures les plus élevées.

Selon une particularité de réalisation, chaque secteur de paroi de chambre interne ou externe est relié au niveau de chacun de ses retours au carter métallique interne ou externe correspondant au moyen d'un premier et d'au moins d'un deuxième élément de liaison. La liaison entre le ou chaque deuxième élément de liaison et le retour de secteur de paroi de chambre correspondant est alors réalisée avec jeu en direction longitudinale.

De préférence, des joints d'étanchéité sont interposés entre secteurs adjacents de paroi de chambre interne ou externe, par exemple en étant interposés entre des parties arrondies en regard des bords longitudinaux repliés de deux secteurs adjacents.

Chaque joint peut avoir une section en forme de X ou de 8.

Avantageusement, chaque joint comporte une structure fibreuse en fibres réfractaires, laquelle peut être au moins partiellement densifiée par un matériau céramique.

Avantageusement encore, sont prévus des éléments de maintien de chaque joint en direction longitudinale par rapport aux bords longitudinaux des secteurs de paroi de chambre entre lesquels il est disposé.

Selon une particularité de réalisation, le fond de chambre comprend des brides annulaires interne et externe sur lesquelles sont raccordés les secteurs des parois de chambre interne et externe.

Chaque secteur de paroi de chambre peut être formé en une seule pièce avec une partie formant casquette qui s'étend en amont du raccordement du secteur avec le fond de chambre.

En variante, les parties formant casquettes prolongeant les parois de chambre interne et externe en amont du raccordement avec le fond de chambre sont distinctes des secteurs de paroi de chambre et sont fixées sur des brides annulaires interne et externe du fond de chambre.

L'invention vise aussi un moteur aéronautique à turbine à gaz muni d'un ensemble de chambre de combustion tel que défini ci-avant.

### Brève description des dessins

L'invention sera mieux comprise à la lecture de la description faite ci-après, à titre indicatif mais non limitatif, en référence aux dessins annexés sur lesquels :
- la figure 1 montre de façon très schématique un moteur d'avion à turbine à gaz ;
- la figure 2 est une vue très schématique en coupe d'une chambre de combustion et de son environnement dans un moteur à turbine à gaz tel que par exemple celui de la figure 1 ;
- la figure 3 est une vue en perspective en partie arrachée montrant, depuis l'aval, un ensemble de chambre de combustion selon un mode de réalisation de l'invention ;
- la figure 4 est une vue en perspective partielle montrant à échelle agrandie une partie de l'ensemble de chambre de combustion de la figure 3 ;
- la figure 5 est une vue en perspective montrant à échelle encore agrandie des détails de la figure 4 ;
- la figure 6 est une vue similaire à celle de la figure 5 montrant une variante de réalisation de joints d'étanchéité ;
- la figure 7 est une vue en perspective similaire à celle de la figure 4 montrant une variante de réalisation de casquettes prolongeant les parois de la chambre de combustion en amont du fond de celle-ci ; et
- la figure 8 est une vue partielle montrant un mode de réalisation de l'étanchéité entre la sortie de la chambre de combustion et l'entrée d'un distributeur de turbine haute pression, ce mode de réalisation ne faisant pas partie de l'invention.

### Description détaillée d'un mode de réalisation

Des modes de réalisation de l'invention seront décrits ci-après dans le cadre de son application à un moteur d'avion à turbine à gaz.

L'invention est toutefois applicable à des chambres de combustion de turbines à gaz pour d'autres moteurs aéronautiques ou pour des turbines industrielles.

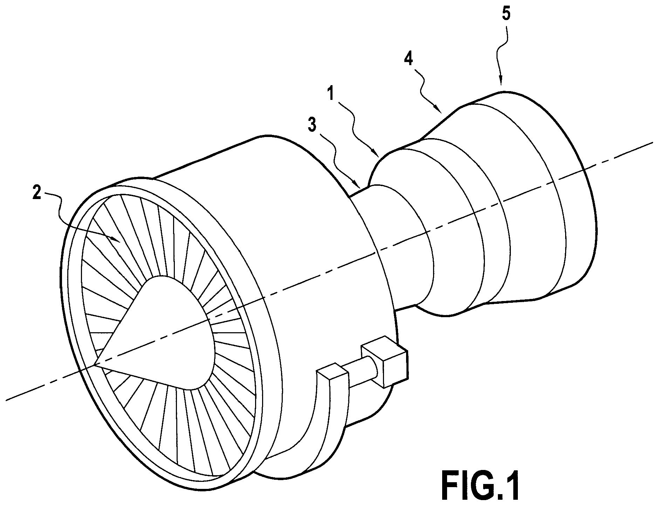

La figure 1 montre très schématiquement un moteur d'avion à turbine à gaz à deux corps comprenant, de l'amont vers l'aval, dans le sens d'écoulement de flux gazeux, une soufflante 2, un compresseur haute pression (HP) 3, une chambre de combustion 1, une turbine haute pression (HP) 4 et une turbine basse pression (BP) 5, les turbines HP et BP étant reliées au compresseur HP et à la soufflante par des arbres respectifs.

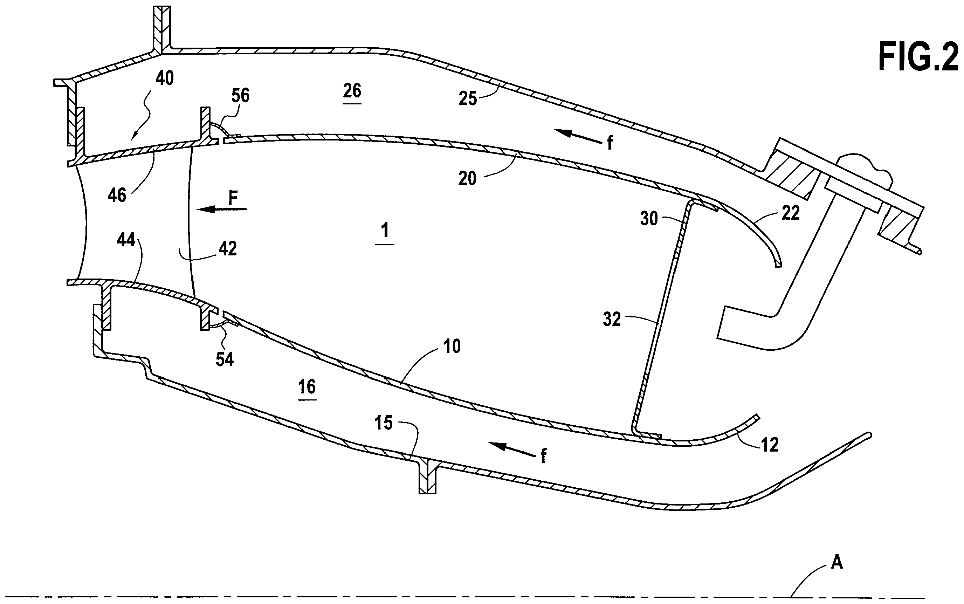

Comme le montre très schématiquement la figure 2, la chambre de combustion est de forme annulaire d'axe A et est délimitée par une paroi annulaire interne 10, une paroi annulaire externe 20 et un fond de chambre 30 relié aux parois 10 et 20. Le fond 30, qui délimite l'extrémité amont de la chambre de combustion, présente des ouvertures 32 réparties autour de l'axe A pour le logement d'injecteurs (non représentés) permettant l'injection de carburant et d'air dans la chambre de combustion. Au-delà du fond 30, les parois 10, 20 sont prolongées par des casquettes interne et externe, respectivement 12, 22, qui contribuent à la canalisation d'air de contournement de la chambre de combustion.

Les parois interne 10 et externe 20 de la chambre de combustion sont en matériau composite à matrice céramique (CMC). Le fond 30 peut également être en CMC, de préférence alors le même matériau que celui des parois 10, 20, ou peut être métallique, étant exposé à des températures inférieures à celles auxquelles les parois 10, 20 sont exposées.

La chambre de combustion est supportée entre un carter métallique interne 15 et un carter métallique externe 25 au moyen d'éléments de liaison élastiquement déformables (non montrés sur la figure 2) qui relient le carter interne 15 à la paroi interne 10 et le carter externe 25 à la paroi externe 20. Les éléments de liaison souples s'étendent dans les espaces 16, 26 entre le carter 15 et la paroi 10 et entre le carter 25 et la paroi 20, lesquels espaces sont parcourus par un flux d'air de refroidissement (flèches f) contournant la chambre de combustion. La souplesse des éléments de liaison, qui sont par exemple métalliques, permet d'absorber les différences de variations dimensionnelles d'origine thermique entre les parois de chambre en CMC et les carters métalliques.

La sortie de la chambre de combustion, à son extrémité aval, se raccorde avec l'entrée d'un distributeur de turbine HP 40 qui constitue l'étage d'entrée de la turbine HP. Le distributeur 40 comporte une pluralité d'aubes fixes 42 réparties angulairement autour de l'axe A. Les aubes 42 sont solidaires à leurs extrémités radiales de parois ou plates-formes respectivement interne 44 et externe 46 dont les faces intérieures définissent la veine d'écoulement dans le distributeur 40 du flux gazeux issu de la chambre de combustion (flèche F).

Au niveau du raccordement entre la sortie de la chambre de combustion et l'entrée du distributeur de turbine HP, l'étanchéité est assurée par des lèvres annulaires interne 54 et externe 56. La lèvre 54 a une partie d'extrémité fixée ou en appui sur la surface extérieure de la paroi 10 et une autre partie d'extrémité en appui contre un rebord annulaire de la paroi 44. La lèvre 56 a une partie d'extrémité fixée ou en appui sur la surface extérieure de la paroi 20 et une autre partie d'extrémité en appui contre un rebord annulaire de la paroi 46.

Un ensemble de chambre de combustion tel qu'il vient d'être décrit est connu en soi.

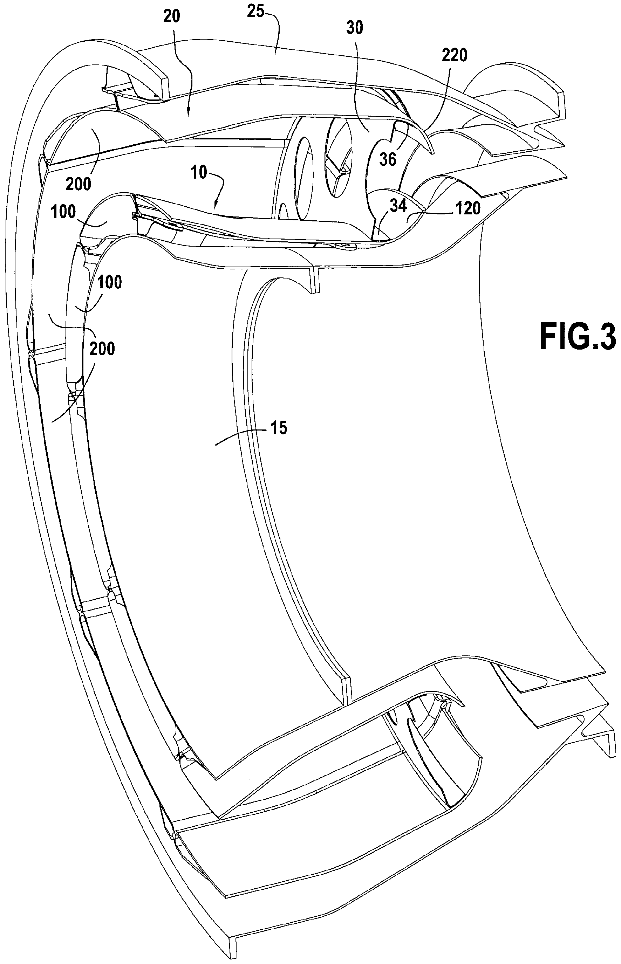

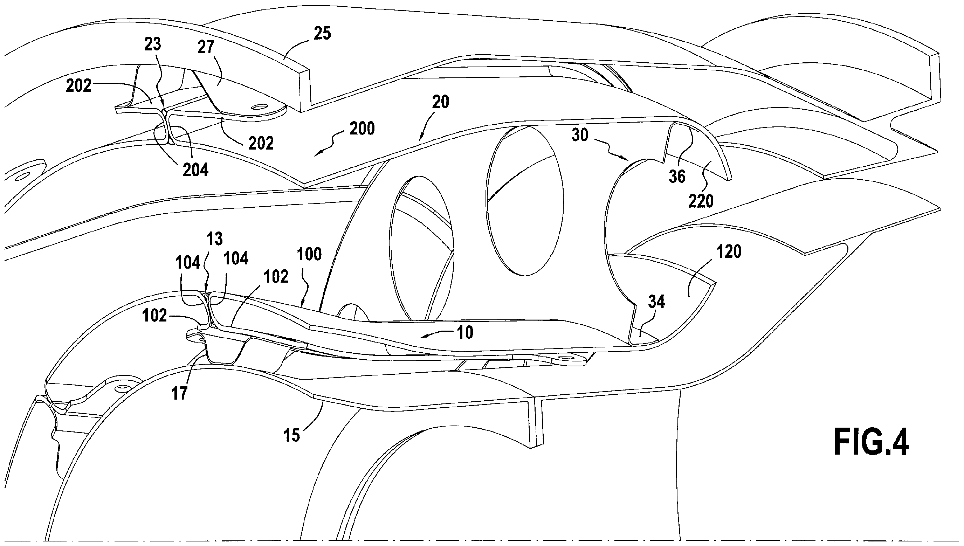

Comme le montrent les figures 3 à 5, les parois interne 10 et externe 20 de la chambre de combustion sont, conformément à l'invention, divisées circonférentiellement en secteurs adjacents, respectivement 100 et 200, chaque secteur s'étendant continûment sur toute la longueur axiale de la chambre, c'est-à-dire depuis le fond de chambre jusqu'à l'extrémité aval de la chambre.

Le long de leurs bords longitudinaux, les secteurs 100 se raccordent de façon étanche pour former la paroi 10. Au niveau de leurs bords longitudinaux, les secteurs 100 sont repliés vers l'extérieur de la chambre pour former des parties à section en U se terminant par des retours 102 qui sont espacés de la face extérieure de la paroi de chambre 10 et sensiblement parallèles à celle-ci. Les retours 102 se raccordent au reste des secteurs 100 par des parties arrondies 104. Des joints d'étanchéité 13 sont interposés entre les parties arrondies 104 des bords longitudinaux en regard de secteurs 100 adjacents. Les joints 13 sont maintenus en place au moyen de goupilles ou épingles 14 qui traversent les parties arrondies 104 au niveau de leurs sommets et qui traversent aussi les parties de joint 13 situées entre ces sommets.

Le long de son bord interne, le fond de chambre 30 est replié vers l'amont pour former une bride annulaire 34 sur laquelle sont fixés les secteurs 100 au moyen d'éléments de liaison mécanique tels que des vis ou boulons (non représentés).

La casquette interne 12 est également divisée circonférentiellement en secteurs adjacents 120 qui sont réalisés en une seule pièce avec les secteurs 100 et sont formés par le prolongement des secteurs 100 vers l'amont au-delà de la liaison avec le fond 30. On note que le prolongement circonférentiel et le repli des bords longitudinaux des secteurs 100 pour former les parties arrondies 104 et les retours 102 ne sont réalisés que sur la partie des secteurs 100 s'étendant entre le fond 30 et l'extrémité aval de la chambre de combustion.

La liaison entre la paroi interne 10 et le carter métallique interne 15 est réalisée au moyen d'éléments de liaison 17 élastiquement déformables qui assurent en outre le maintien en position mutuelle des secteurs 100. Les éléments de liaison 17 sont disposés en une ou plusieurs rangées circonférentielles, chaque retour 102 de secteur 100 étant relié au carter métallique 15 par au moins un élément de liaison. Au moins une rangée circonférentielle d'éléments de liaison est prévue au voisinage de l'extrémité aval des secteurs 100, ceux-ci étant fixés au fond 30 du côté amont de la chambre. Au moins une autre rangée circonférentielle peut toutefois être prévue pour assurer un bon maintien mutuel des secteurs 100. Dans l'exemple illustré, une deuxième rangée circonférentielle d'éléments de liaison 17 est prévue au voisinage du fond de la chambre.

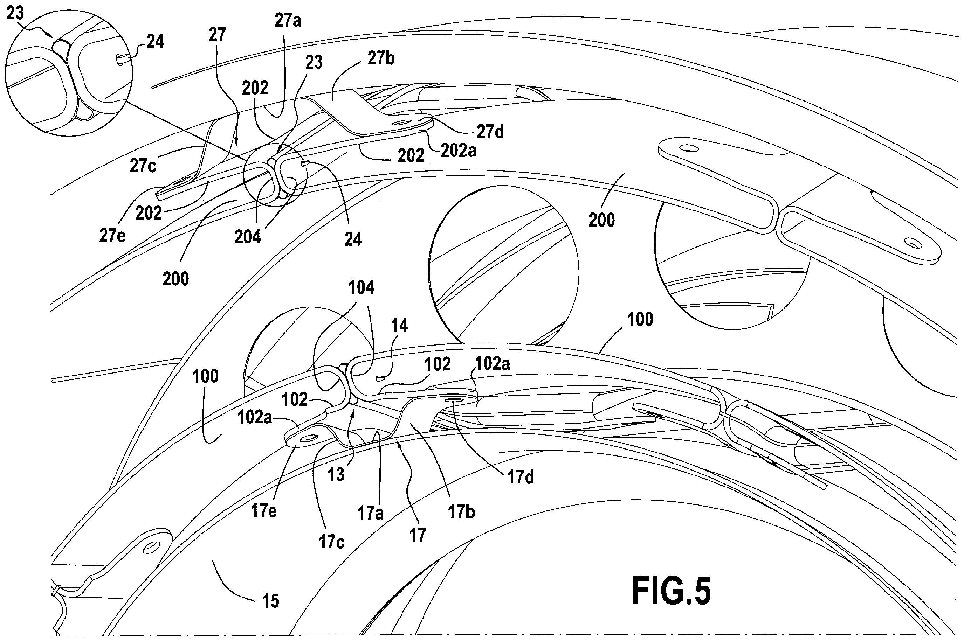

Dans l'exemple illustré, les éléments de liaison 17 ont une forme de pontets à section en Ω (oméga) dont le sommet 17a est fixé au carter métallique interne 15 et dont les branches 17b, 17c se terminent par des pieds 17d, 17e fixés sur les faces externes des retours 102 voisins de deux secteurs 100 adjacents. La fixation des éléments de liaison sur le carter métallique 15 et sur les retours 102 peut être réalisée par boulonnage, vissage ou rivetage. On note que pour la fixation des pieds 17d, 17e, les retours 102 forment des pattes 102a (figure 5) qui s'étendent circonférentiellement sur une distance plus longue que le reste des retours, la dimension circonférentielle des retours 102 (hors des zones formant les pattes 102a) pouvant être très limitée.

Le long de leurs bords longitudinaux, les secteurs 200 se raccordent de façon étanche pour former la paroi 20. De façon similaire aux secteurs 100, les secteurs 200 sont repliés vers l'extérieur au niveau de leurs bords longitudinaux pour former des parties à section en U se terminant par des retours 202 qui sont espacés de la face extérieure de la paroi de chambre 20 et sont sensiblement parallèle à celle-ci. Les retours 202 se raccordent au reste des secteurs 200 par des parties arrondies 204. Des joints d'étanchéité 23 sont interposés entre les parties arrondies 204 des bords longitudinaux en regard de secteurs 200 adjacent. Les joints 23 sont maintenus en place au moyen de goupilles ou épingles 24 de la même façon que les joints 13 au moyen des goupilles ou épingles 14.

Le long de son bord externe, le fond de chambre 30 est replié vers l'amont pour former une bride annulaire 36 sur laquelle sont fixés les secteurs 200 au moyen d'éléments de liaison mécanique tels que des vis ou boulons (non représentés).

La casquette externe 22 est également divisée circonférentiellement en secteurs adjacents 220 qui sont réalisés en une seule pièce avec les secteurs 200 et sont formés par les prolongements des secteurs 200 vers l'amont au-delà de la liaison avec le fond de chambre 30. On note que le repli des bords longitudinaux des secteurs 200 pour former les parties arrondies 204 et les retours 202 n'est réalisé que sur la partie de la longueur des secteurs 200 s'étendant entre le fond 30 et l'extrémité aval de la chambre de combustion.

La liaison entre la paroi externe 20 et le carter métallique externe 25 est réalisée au moyen d'éléments de liaison 27 élastiquement déformables qui assurent en outre le maintien mutuel des secteurs 200. Les éléments de liaison 27 sont disposés en une ou plusieurs rangées circonférentielles de la même manière que les éléments de liaison 17, chaque retour 202 de secteur 200 étant relié au carter métallique 25 par au moins un élément de liaison.

Dans l'exemple illustré, les éléments de liaison 27 forment des pontets à section en Ω similaires aux éléments de liaison 17 avec un sommet 27a fixé au carter métallique 25 et des branches 27b, 27c se terminant par des pieds 27d, 27e fixés sur les faces externes des retours 202 voisins de deux secteurs adjacents 200. La fixation des éléments de liaison sur le carter métallique 25 et sur les retours 202 peut être réalisée par boulonnage, vissage ou rivetage. De la même manière que les retours 102, les retours 202 forment des pattes 202a pour la fixation des pieds 27d, 27e des éléments de liaison 27, et la dimension circonférentielle des retours 202 (hors des zones formant les pattes 202a) peut être beaucoup plus faible que celle des pattes.

Les secteurs 100, 200 (réalisés en une seule pièce avec les secteurs 120, 220) sont en matériau composite à matrice céramique ayant un renfort fibreux en fibres réfractaires densifié par une matrice céramique. Les fibres du renfort fibreux peuvent être en carbone ou en céramique et une interphase par exemple en carbone pyrolytique (PyC) ou en nitrure de bore (BN) peut être interposée entre les fibres du renfort et la matrice céramique. Le renfort fibreux peut être réalisé par superposition de strates fibreuses telles que des tissus ou des nappes ou par tissage tridimensionnel. La matrice céramique peut être en carbure de silicium ou autre carbure, nitrure ou oxyde céramique et peut aussi comprendre une ou plusieurs phases de matrice autocicatrisantes, c'est-à-dire capables de cicatriser des fissures par passage à l'état pâteux à une certaine température. Des matériaux CMC à matrice autocicatrisante sont décrits dans les documents US 5 965 266, US 6 291 058 et US 6 068 930.

L'interphase peut être déposée sur les fibres du renfort par CVI. Pour la densification par la matrice céramique on peut mettre en oeuvre des processus de densification par CVI ou par voie liquide ou encore par voie réactive (imprégnation par un métal fondu). Les processus d'élaboration de pièces en CMC sont bien connus. On pourra en particulier effectuer une première phase de densification pour consolidation du renfort fibreux en le maintenant dans la forme désirée au moyen d'un outillage, la densification étant ensuite poursuivie sans outillage de maintien.

Le fond de chambre 30 réalisé en une seule pièce annulaire peut être métallique et les éléments de liaison mécanique entre les secteurs 100, 200 et les brides 34, 36 du fond 30 peuvent être métalliques, la liaison étant réalisée en zone « froide ».

Les joints 13, 23 peuvent être réalisés sous forme de structure fibreuse en fibres réfractaires. On peut utiliser une structure fibreuse non densifiée formée de fibres en céramique, par exemple des fibres en carbure de silicium ou autres carbure, nitrure ou oxyde céramique, la structure fibreuse étant obtenue par exemple par tissage ou par tressage. On peut aussi utiliser une structure fibreuse en fibres réfractaires (carbone ou céramique) au moins partiellement densifiée par une matrice céramique obtenue par CVI ou par voie liquide.

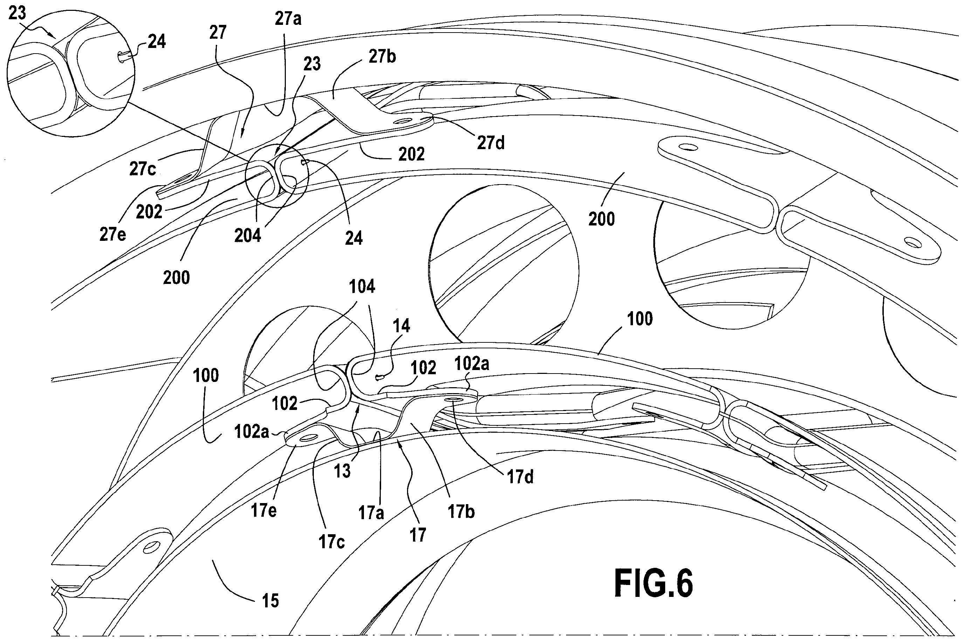

Dans le mode de réalisation de la figure 5, les joints 13, 23 ont une section en forme de 8. En variante, et comme illustré par la figure 6, les joints d'étanchéité 13, 23 peuvent être à section en forme de X.

Le maintien en position des joints 13, 23 par les goupilles ou épingles telles que 14, 24 étant réalisé en zone « froide » dans les espaces 16, 26, les goupilles ou épingles peuvent être métalliques.

Les éléments de liaison 17, 27 élastiquement déformables sont réalisés en métal avec une épaisseur réduite leur conférant la souplesse désirée. On notera qu'il est possible d'utiliser des éléments de liaison non communs à deux secteurs 100 ou 200, par exemple en reliant chaque patte 102a, 202a au carter métallique 15 ou 25 par une attache souple particulière. On notera aussi que les éléments de liaison entre secteurs 100, 200 et carters métalliques 15, 25 pourront être précontraints pour exercer une force d'appui mutuel entre les secteurs 100, 200.

Les liaisons mécaniques entre les éléments de liaison et les carters métalliques et entre les éléments de liaison et les secteurs 100, 200 peuvent être réalisées par des vis, boulons ou rivets métalliques puisqu'elles se trouvent en zones « froides » dans les espaces 16, 26.

Lorsque plusieurs rangées circonférentielles d'éléments de liaison 17, 27 sont prévues, la fixation des éléments d'une rangée, par exemple celle la plus proche de l'extrémité aval de la chambre, est réalisée sans jeu sur les retours 102, 202 et les carters métalliques 15, 25 et la fixation des éléments de l'autre ou chaque autre rangée est réalisée avec un jeu en direction longitudinale pour tenir compte de différences de variation dimensionnelle dans cette direction.

La souplesse des éléments de liaison 17, 27 combinée avec la capacité de déformation élastique des retours 102, 202 des secteurs 100, 200, en particulier au niveau des pattes 102a, 202a permet de compenser aisément les différences de variations dimensionnelles d'origine thermique entre les parois 10, 20 en CMC et les carters métalliques 15, 25.

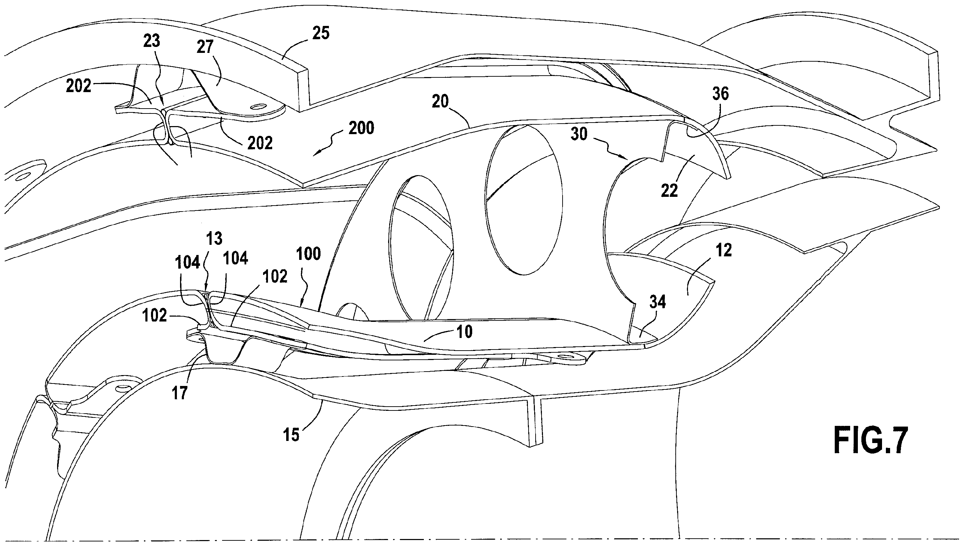

La figure 7 illustre une variante de réalisation selon laquelle les casquettes 12, 22 sont réalisées séparément des secteurs 100, 200. Les casquettes 12, 22 peuvent alors être métalliques et réalisées en une seule pièce. Elles sont fixées sur les brides 34, 36 du fond de chambre 30 au moyen par exemple de vis ou boulons métalliques, de la même manière que les extrémités amont des secteurs 100, 200.

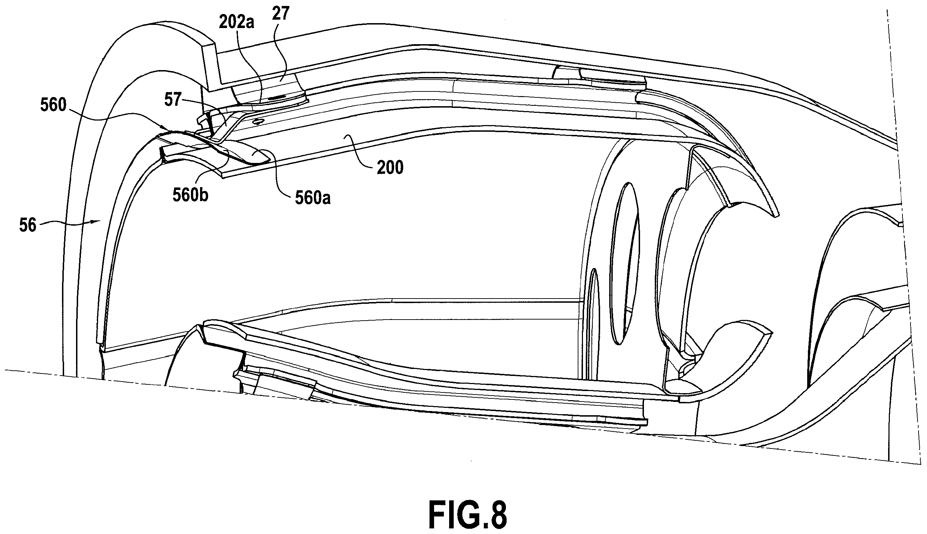

Un mode de réalisation de l'étanchéité entre l'extrémité aval de la chambre de combustion et le distributeur de turbine 40 est illustré par la figure 8, ce mode de réalisation ne faisant pas partie de l'invention.

La lèvre d'étanchéité annulaire 56 est par exemple en métal. Elle est divisée circonférentiellement en secteurs adjacents 560 de la même façon que la paroi externe 20. La partie amont 560a de chaque secteur de lèvre 560 est fixée ou en appui sur la surface extérieure d'un secteur de paroi 200 correspondant. La fixation peut être réalisée par brasage. A partir de la partie amont 560a, le secteur de lèvre 560 s'étend vers l'aval en formant une partie 560b qui s'éloigne progressivement de la surface extérieure du secteur de paroi 200.

Une languette métallique flexible 57 a une extrémité fixée à la patte de liaison 202a située au voisinage de l'extrémité aval du secteur de paroi 200, la fixation pouvant être commune avec celle d'un pied de pontet 27. A son autre extrémité, la languette flexible 57 est en appui sur la partie 560b du secteur de lèvre 560. La languette 57 est précontrainte en flexion pour exercer sur le secteur de lèvre 560 une force élastique pour l'appliquer à la fois contre la face extérieure du secteur de paroi 200 et contre le rebord annulaire de la paroi 46 du distributeur de turbine (figure 2).

La lèvre d'étanchéité annulaire interne 54 est divisée circonférentiellement en secteurs adjacents de la même manière que la lèvre 56, chaque secteur de lèvre étant fixé ou en appui sur un secteur de paroi 100 correspondant et étant associé à une languette métallique de la même façon que les secteurs de lèvre 560.

Dans les modes de réalisations décrits, le nombre de secteurs formant chacune des parois interne et externe de la chambre de combustion dépend notamment de la capacité de déformation du renfort fibreux du matériau CMC lui permettant de s'adapter à la forme d'un secteur au stade de la fabrication de celui-ci.

Par conséquent, le nombre de secteurs pourra devoir être plus élevé lorsque le renfort fibreux présente une moindre déformabilité ou lorsque la déformation devant lui être imposée est plus importante, notamment si les casquettes sont intégrées aux secteurs comme dans le mode de réalisation des figures 2 à 6.

Ainsi, le nombre de secteurs pour chaque paroi de chambre peut être choisi de sorte que chaque secteur couvre un angle correspondant à un ou plusieurs pas angulaires des logements d'injecteurs au niveau du fond de chambre, par exemple, un, deux ou trois pas angulaires de logements d'injecteurs.

Dans les exemples illustrés, le nombre de secteurs est égal au nombre de logements d'injecteurs.

## Revendications

1. Ensemble de chambre de combustion de turbine à gaz, comportant : un carter métallique interne (15) ; un carter métallique externe (25) ; une chambre de combustion annulaire ayant une paroi interne (10) et une paroi externe (20) en matériau composite à matrice céramique et un fond de chambre (30) raccordé aux parois interne et externe ; et des éléments de liaison (17, 27) élastiquement déformables reliant la paroi interne et la paroi externe de la chambre respectivement au carter métallique interne et au carter métallique externe,
**caractérisé en ce que** chacune des parois interne (10) et externe (20) de la chambre est divisée circonférentiellement en secteurs (100, 200) adjacents le long de bords longitudinaux, chaque secteur s'étendant continûment depuis le fond de chambre jusqu'à l'extrémité opposée de la chambre, chaque secteur étant replié vers l'extérieur de la chambre au niveau de chacun de ses bords longitudinaux pour former une partie à section en U se terminant par un retour (102, 202) espacé de la face extérieure de la paroi de chambre correspondante, et les éléments de liaison (17, 27) sont reliés aux parois interne et externe de la chambre par fixation sur les retours des secteurs.

2. Ensemble selon la revendication 1, **caractérisé en ce que** les éléments de liaison (17, 27) sont en forme de pontets à section sensiblement en « oméga », chaque pontet ayant un sommet (17a, 27a) relié à l'un des carters métalliques interne et externe et des pieds (17d, 17e, 27d, 27e) reliés aux retours voisins de deux secteurs adjacents de la paroi de chambre interne ou externe correspondante.

3. Ensemble selon l'une quelconque des revendications 1 et 2, **caractérisé en ce que** les éléments de liaison (17, 27) sont fixés sur les faces externes des retours (102, 202) des secteurs.

4. Ensemble selon l'une quelconque des revendications 1 à 3, **caractérisé en ce que** chaque secteur (100, 200) de paroi de chambre interne ou externe est relié au niveau de chacun de ses retours au carter métallique interne ou externe correspondant au moyen d'un premier et d'au moins un deuxième élément de liaison, et la liaison entre le ou chaque deuxième élément de liaison et le retour de secteur de paroi de chambre correspondant étant réalisée avec jeu en direction longitudinale.

5. Ensemble selon l'une quelconque des revendications 1 à 4, **caractérisé en ce que** des joints d'étanchéité (13, 23) sont interposés entre secteurs adjacents de paroi de chambre interne ou externe.

6. Ensemble selon la revendication 5, **caractérisé en ce que** les joints (13, 23) sont interposés entre des parties arrondies en regard (104, 204) des bords longitudinaux repliés de deux secteurs adjacents.

7. Ensemble selon l'une quelconque des revendications 5 et 6, **caractérisé en ce que** chaque joint (13, 23) a une section en forme de X ou de 8.

8. Ensemble selon l'une quelconque des revendications 5 à 7, **caractérisé en ce que** chaque joint (13, 23) comporte une structure fibreuse en fibres réfractaires.

9. Ensemble selon la revendication 8, **caractérisé en ce que** la structure fibreuse est au moins partiellement densifiée par un matériau céramique.

10. Ensemble selon l'une quelconque des revendications 6 à 9, **caractérisé en ce que** sont prévus des éléments (14, 24) de maintien de chaque joint (13, 23) en direction longitudinale par rapport aux bords longitudinaux des secteurs de paroi de chambre entre lesquels il est disposé.

11. Ensemble selon l'une quelconque des revendications 1 à 10, **caractérisé en ce que** le fond de chambre (30) comprend des brides annulaires interne (34) et externe (36) sur lesquelles sont raccordés les secteurs des parois de chambre interne et externe.

12. Ensemble selon l'une quelconque des revendications 1 à 11, **caractérisé en ce que** chaque secteur (100, 200) de paroi de chambre est formé en une seule pièce avec une partie formant secteur de casquette (120, 220) qui s'étend en amont du raccordement du secteur avec le fond de chambre (30).

13. Ensemble selon l'une quelconque des revendications 1 à 11, **caractérisé en ce que** des parties formant casquettes (12, 22) prolongeant les parois de chambre interne et externe en amont du raccordement avec le fond de chambre sont distinctes des secteurs de paroi de chambre et sont fixées sur des brides annulaires interne (34) et externe (36) du fond de chambre (30).

14. Moteur à turbine à gaz comportant un ensemble de chambre de combustion selon l'une quelconque des revendications 1 à 13.

## Patentansprüche

1. Gasturbinenbrennkammeranordnung, umfassend: ein inneres Metallgehäuse (15); ein äußeres Metallgehäuse (25); eine ringförmige Brennkammer, die eine Innenwand (10) und eine Außenwand (20) aus Keramikmatrix-Verbundwerkstoff und einen Kammerboden (30), der an die Innen- und die Außenwand angeschlossen ist, aufweist; sowie elastisch verformbare Verbindungselemente (17, 27), die die Innenwand und die Außenwand der Kammer mit dem inneren Metallgehäuse bzw. mit dem äußeren Metallgehäuse verbinden,
**dadurch gekennzeichnet, dass** eine jede der Innenwand (10) und Außenwand (20) der Kammer in Umfangsrichtung in entlang von Längsrändern benachbarte Sektoren (100, 200) unterteilt ist, wobei jeder Sektor sich von dem Kammerboden bis zu dem gegenüberliegenden Ende der Kammer durchgehend erstreckt, wobei jeder Sektor im Bereich eines jeden seiner Längsränder zur Außenseite der Kammer umgebogen ist, um einen Teil mit U-förmigem Querschnitt zu bilden, der mit einem Umschlag (102, 202), welcher von der Außenseite der entsprechenden Kammerwand beabstandet ist, abschließt, und die Verbindungselemente (17, 27) mit der Innen- und der Außenwand der Kammer durch Befestigung an den Umschlägen der Sektoren verbunden sind.

2. Anordnung nach Anspruch 1, **dadurch gekennzeichnet, dass** die Verbindungselemente (17, 27) in Form von Brücken mit im Wesentlichen "Omega"-förmigem Querschnitt vorliegen, wobei jede Brücke einen Scheitel (17a, 27a), der mit einem der inneren und äußeren Metallgehäuse verbunden ist, und Füße (17d, 17e, 27d, 27e), die mit den benachbarten Umschlägen von zwei benachbarten Sektoren der entsprechenden inneren oder äußeren Kammerwand verbunden sind, aufweist.

3. Anordnung nach einem der Ansprüche 1 und 2, **dadurch gekennzeichnet, dass** die Verbindungselemente (17, 27) an den Außenseiten der Umschläge (102, 202) der Sektoren befestigt sind.

4. Anordnung nach einem der Ansprüche 1 bis 3, **dadurch gekennzeichnet, dass** jeder Sektor (100, 200) der inneren oder äußeren Kammerwand im Bereich eines jeden seiner Umschläge mit dem entsprechenden inneren oder äußeren Metallgehäuse mittels eines ersten und wenigstens eines zweiten Verbindungselements verbunden ist, und die Verbindung zwischen dem oder jedem zweiten Verbindungselement und dem entsprechenden Umschlag eines Kammerwandsektors mit Spiel in Längsrichtung hergestellt ist.

5. Anordnung nach einem der Ansprüche 1 bis 4, **dadurch gekennzeichnet, dass** Dichtungen (13, 23) zwischen benachbarten Sektoren von innerer oder äußerer Kammerwand eingefügt sind.

6. Anordnung nach Anspruch 5, **dadurch gekennzeichnet, dass** die Dichtungen (13, 23) zwischen gegenüberliegenden abgerundeten Teilen (104, 204) der umgebogenen Längsränder von zwei benachbarten Sektoren eingefügt sind.

7. Anordnung nach einem der Ansprüche 5 und 6, **dadurch gekennzeichnet, dass** jede Dichtung (13, 23) einen X- oder 8-förmigen Querschnitt aufweist.

8. Anordnung nach einem der Ansprüche 5 bis 7, **dadurch gekennzeichnet, dass** jede Dichtung (13, 23) eine Faserstruktur aus feuerfesten Fasern aufweist.

9. Anordnung nach Anspruch 8, **dadurch gekennzeichnet, dass** die Faserstruktur wenigstens teilweise durch ein Keramikmaterial verdichtet ist.

10. Anordnung nach einem der Ansprüche 6 bis 9, **dadurch gekennzeichnet, dass** Elemente (14, 24) zum Halten einer jeden Dichtung (13, 23) in Längsrichtung gegenüber den Längsrändern der Kammerwandsektoren, zwischen denen sie angeordnet ist, vorgesehen sind.

11. Anordnung nach einem der Ansprüche 1 bis 10, **dadurch gekennzeichnet, dass** der Kammerboden (30) einen inneren (34) und einen äußeren (36) Ringflansch umfasst, an dem die Sektoren der inneren und der äußeren Kammerwand angeschlossen sind.

12. Anordnung nach einem der Ansprüche 1 bis 11, **dadurch gekennzeichnet, dass** ein jeder Sektor (100, 200) der Kammerwand aus einem einzigen Stück ausgebildet ist, mit einem einen Schirmsektor bildenden Teil (120, 220), der sich stromauf der Verbindung des Sektors mit dem Kammerboden (30) erstreckt.

13. Anordnung nach einem der Ansprüche 1 bis 11, **dadurch gekennzeichnet, dass** Schirme bildende Teile (12, 22), welche die innere und die äußere Kammerwand stromauf der Verbindung mit dem Kammerboden fortsetzen, von den Kammerwandsektoren getrennt sind und an einem inneren (34) und einem äußeren (36) Ringflansch des Kammerbodens (30) befestigt sind.

14. Gasturbinentriebwerk, das eine Brennkammeranordnung nach einem der Ansprüche 1 bis 13 umfasst.

## Claims

1. A gas turbine combustion chamber assembly comprising:
an inner metal casing (15); an outer metal casing (25); an annular combustion chamber having an inner wall (10) and an outer wall (20) of ceramic matrix composite material and a chamber end wall (30) connected to the inner and outer walls; and elastically-deformable link elements (17, 27) connecting the inner wall and the outer wall of the chamber respectively to the inner metal casing and to the outer metal casing,
the assembly being **characterized in that** each of the inner and outer walls (10, 20) of the chamber is subdivided circumferentially into adjacent sectors (100, 200) along longitudinal edges, each sector extending continuously from the chamber end wall to the opposite end of the chamber, each sector being folded outwards from the chamber via each of its longitudinal edges so as to form a channel-section portion, each terminated by a folded-back margin (102, 202) that is spaced apart from the outer face of the corresponding chamber wall, and the link elements (17, 27) are connected to the inner and outer walls of the chamber by being fastened to the margins of the sectors.

2. An assembly according to claim 1, **characterized in that** the link elements (17, 27) are in the form of bridges of substantially omega-shaped section, each bridge having a top (17a, 27a) that is connected to one of the inner and outer metal casings, and feet (17d, 17e, 27d, 27e) that are connected to adjacent margins of two adjacent sectors of the corresponding inner or outer chamber wall.

3. An assembly according to claim 1 or claim 2, **characterized in that** the link elements (17, 27) are fastened to the outer faces of the margins (102, 202) of the sectors.

4. An assembly according to any one of claims 1 to 3, **characterized in that** each inner or outer chamber wall sector (100, 200) is connected via each of its margins to the corresponding inner or outer metal casing by means of a first and at least one second link element, and the connection between the or each second link element and the corresponding chamber wall sector margin is provided with slack in the longitudinal direction.

5. An assembly according to any one of claims 1 to 4, **characterized in that** sealing gaskets (13, 23) are interposed between adjacent inner or outer chamber wall sectors.

6. An assembly according to claim 5, **characterized in that** the gaskets (13, 23) are interposed between facing rounded portions (104, 204) of the folded-back longitudinal edges of two adjacent sectors.

7. An assembly according to claim 5 or claim 6, **characterized in that** each gasket (13, 23) presents a section of X- or 8-shape.

8. An assembly according to any one of claims 5 to 7, **characterized in that** each gasket (13, 23) comprises a fiber structure of refractory fibers.

9. An assembly according to claim 8, **characterized in that** the fiber structure is densified at least in part by a ceramic material.

10. An assembly according to any one of claims 6 to 9, **characterized in that** elements (14, 24) are provided for holding each gasket (13, 23) in the longitudinal direction relative to the longitudinal edges of the chamber wall sectors between which the gasket is placed.

11. An assembly according to any one of claims 1 to 10, **characterized in that** the chamber end wall (30) includes inner and outer annular flanges (34, 36) having the inner and outer chamber wall sectors connected thereto.

12. An assembly according to any one of claims 1 to 11, **characterized in that** each chamber wall sector (100, 200) is made integrally with a portion forming a cowl sector (120, 220) that extends upstream from the connection between the sector and the chamber end wall (30).

13. An assembly according to any one of claims 1 to 11, **characterized in that** cowl-forming portions (12, 22) extend the inner and outer chamber walls upstream from the connection with the chamber end wall, which cowl-forming portions are distinct from the chamber wall sectors and are fastened to the inner and outer annular flanges (34, 36) of the chamber end wall (30).

14. A gas turbine engine including a combustion chamber according to any one of claims 1 to 13.
